Europäisches Patentamt

European Patent Office

Office européen des brevets

(19)

(11) **EP 1 100 224 A1**

(12) **DEMANDE DE BREVET EUROPEEN**

(43) Date de publication:
**16.05.2001 Bulletin 2001/20**

(51) Int Cl.[7]: **H04L 7/02**, H04L 12/56,
H04B 7/185, H04L 27/233,
H04L 27/227

(21) Numéro de dépôt: **00203868.5**

(22) Date de dépôt: **06.11.2000**

(84) Etats contractants désignés:
**AT BE CH CY DE DK ES FI FR GB GR IE IT LI LU
MC NL PT SE TR**
Etats d'extension désignés:
**AL LT LV MK RO SI**

(30) Priorité: **10.11.1999 FR 9914181**

(71) Demandeur: **Koninklijke Philips Electronics N.V.
5621 BA Eindhoven (NL)**

(72) Inventeurs:
• **Legrand, Delphine**
  **75008 Paris (FR)**
• **Brajal, Américo**
  **75008 Paris (FR)**
• **Chouly, Antoine**
  **75008 Paris (FR)**

(74) Mandataire: **de la Fouchardière, Marie-Noelle
Société Civile "SPID"
156, Boulevard Haussmann
75008 Paris (FR)**

(54) **Estimation de phase en présence d'écart de fréquence résiduel**

(57) Les algorithmes d'estimation de phase sont en général utilisés après correction en fréquence des symboles reçus, mais il reste toujours un décalage en fréquence résiduel. Lorsque ce décalage est important, le taux d'erreur binaire devient trop élevé.

L'invention propose une amélioration des algorithmes d'estimation de phase qui les rend plus robustes à l'écart en fréquence résiduel.

Pour cela, un procédé d'estimation de phase selon l'invention comporte:

- une boucle, destinée à être itérée plusieurs fois pour traiter des symboles d'entrée qui, pour la première itération sont constitués par les symboles reçus, ladite boucle comportant :

  → une étape d'estimation de phase pour estimer la phase d'au moins une partie desdits symboles d'entrée,
  → une étape de calcul d'une erreur en fréquence relative aux dits symboles d'entrée, à partir des phases estimées,
  → et une étape de correction en fréquence desdits symboles d'entrée, pour corriger ladite erreur en fréquence, les symboles corrigés constituant les symboles d'entrée pour l'itération suivante,

- et une sortie de boucle pour délivrer des phases estimées et des symboles à corriger.

Application : systèmes interactifs de transmission de données

FIG. 2

EP 1 100 224 A1

## Description

Domaine de l'invention

L'invention concerne un système de communication comportant au moins un émetteur et un récepteur destiné à recevoir des symboles et doté d'un dispositif d'estimation de phase et d'un dispositif de correction de phase.

L'invention concerne également un procédé d'estimation de phase destiné à être appliqué à des symboles reçus par un récepteur, et un procédé de récupération de phase utilisant un tel procédé d'estimation de phase.

L'invention concerne enfin un programme d'ordinateur comportant des moyens pour la mise en oeuvre desdits procédés.

Arrière plan de l'invention

Différentes techniques d'estimation de phase sont décrites dans le compte rendu de conférence «International Conference on Communications, New Orleans, USA, 1-5 May 1994, volume 2, pages 940 à 945 » intitulé « Comparison between digital recovery techniques in the presence of frequency shift » de F. Daffara et J. Lamour.

Ces techniques sont généralement utilisées après correction en fréquence des symboles reçus. Mais il reste toujours un décalage en fréquence résiduel. Pour une erreur en fréquence normalisée de quelques pour-cent, l'erreur en fréquence normalisée résiduelle est typiquement de l'ordre de quelque dixièmes de pour-cent. Les techniques d'estimation de phase connues offrent de bons résultats lorsque le décalage en fréquence résiduel est faible. Lorsque le décalage en fréquence résiduel est important, les résultats obtenus sont insuffisants.

Le problème se pose en particulier pour les terminaux interactifs des systèmes de diffusion par câble ou par satellite qui, pour des raisons de coût, sont généralement équipés d'oscillateurs locaux dont la fréquence est imprécise.

Résumé de l'invention

L'invention a pour but de proposer une technique d'estimation de phase plus robuste au décalage en fréquence résiduel.

Pour cela, un système de communication selon l'invention et tel que décrit dans le paragraphe introductif est caractérisé en ce que ledit dispositif d'estimation de phase est constitué d'une boucle destinée à être parcourue plusieurs fois pour traiter des symboles d'entrée, qui pour le premier parcours sont constitués par les symboles reçus, et qui comporte :

- des moyens d'estimation de phase destinés à estimer la phase d'au moins une partie desdits symboles d'entrée,
- des moyens de calcul d'une erreur en fréquence relative aux dits symboles d'entrée, à partir des phases estimées,
- des moyens de correction en fréquence desdits symboles, pour corriger ladite erreur en fréquence,
- des moyens de bouclage pour fournir les symboles corrigés en fréquence aux dits moyens d'estimation de phase, pour constituer les symboles d'entrée pour le parcours suivant,
- des moyens de sortie de boucle pour fournir des phases estimées et des symboles à corriger aux dits moyens de correction de phase.

De même, un procédé d'estimation de phase selon l'invention et tel que décrit dans le paragraphe introductif est caractérisé en ce qu'il comporte :

- une boucle, destinée à être itérée plusieurs fois pour traiter des symboles d'entrée qui, pour la première itération sont constitués par les symboles reçus, ladite boucle comportant :

  → une étape d'estimation de phase pour estimer la phase d'au moins une partie desdits symboles d'entrée,
  → une étape de calcul d'une erreur en fréquence relative aux dits symboles d'entrée, à partir des phases estimées,
  → et une étape de correction en fréquence desdits symboles d'entrée, pour corriger ladite erreur en fréquence, les symboles corrigés constituant les symboles d'entrée pour l'itération suivante,

- et une sortie de boucle pour délivrer des phases estimées et des symboles à corriger.

Dans un mode de réalisation particulièrement simple et efficace, on utilise des moyens d'estimation du type à maximisation d'espérance.

Dans un autre mode de réalisation, on utilise des moyens de calcul de l'erreur en fréquence, pour une pluralité de symboles constituée de premiers symboles et de derniers symboles, qui consistent à calculer la pente d'une droite obtenue à partir des phases estimées pour une partie au moins desdits premiers symboles. Les estimations de phases disponibles pour les derniers symboles ne sont pas utilisées pour le calcul de pente, parce qu'elles sont moins précises.

Brève description des dessins

L'invention sera mieux comprise, et d'autres détails apparaîtront dans la description qui va suivre en regard des dessins annexés qui sont donnés à titre d'exemples non limitatifs et dans lesquels:

- la figure 1 représente un exemple de système de communication selon l'invention,
- la figure 2 représente un exemple de moyens de récupération de phase, qui mettent en oeuvre un procédé de récupération de phase selon l'invention
- le figure 3 donne des courbes de comparaison des résultats obtenus avec l'invention et avec l'art antérieur.

Description d'un mode de réalisation préférentiel

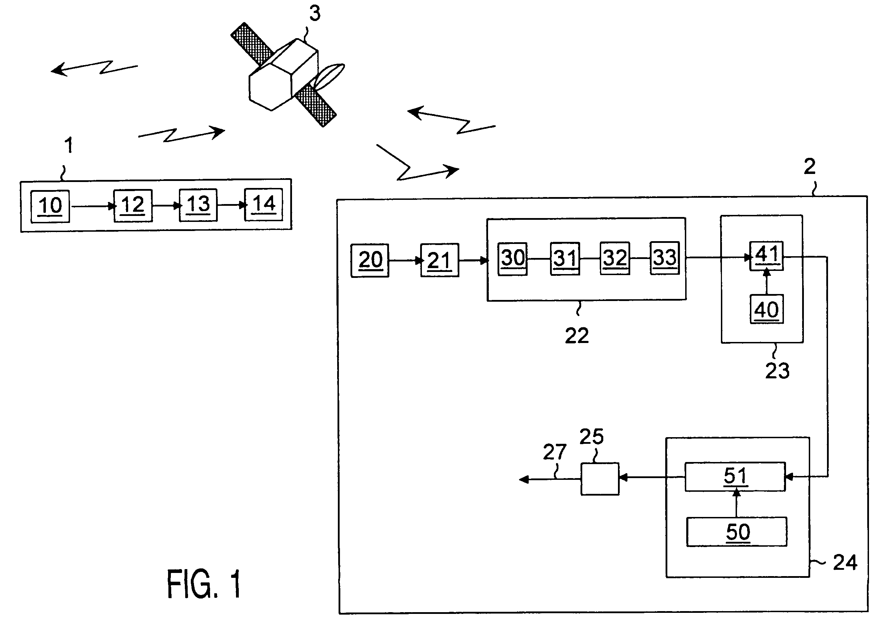

Sur la figure 1, on a représenté un exemple de système de communication selon l'invention. Ce système de communication comporte des terminaux interactifs d'usager 1 qui sont des émetteurs au sens de l'invention et une station de tête 2 qui est un récepteur au sens de l'invention. La station de tête 2 émet des signaux dans une première bande de fréquences Ku (12-14Ghz). Ces signaux sont relayés vers les terminaux interactifs d'usager 1 par un satellite 3. Les terminaux interactifs d'usager émettent des signaux dans une seconde bande de fréquence Ka (20-30Ghz). Ces signaux sont relayés vers la station de tête 2 par le satellite 3.

Chaque terminal 1 comporte une source de données 10, et des moyens de codage de canal 12. Les moyens de codage de canal délivrent des paquets de symboles. Chaque paquet contient un préambule de m symboles $[c_1, ...,c_m]$ et une partie de p symboles $[c_{m+1}, ...c_{m+p}]$ contenant les données utilisateur. Ces paquets sont ensuite transmis à des moyens de filtrage 13, et enfin à des moyens de modulation 14 qui utilisent un oscillateur local de fréquence $f_c$.

La station de tête 2 comporte des moyens de démodulation 20 qui utilisent un oscillateur local ayant une fréquence $f_c+\Delta f_0$ (où $\Delta f_0$ est un écart en fréquence normalisé par rapport à la fréquence symbole), et une phase initiale $\Theta_0$. Elle comporte également des moyens de filtrage 21 et des moyens d'échantillonnage 22 qui échantillonnent le signal de sortie du filtre 21 pour délivrer des symboles appelés symboles reçus. Les symboles reçus sont transmis à des moyens de récupération de fréquence 23 qui estiment le décalage en fréquence normalisé Afo et corrigent les symboles reçus pour compenser le décalage estimé $\Delta \hat{f}_0$. Les moyens de récupération de fréquence 23 délivrent des symboles corrigés en fréquence. Ces symboles corrigés en fréquence sont transmis à des moyens de récupération de phase 24. Les symboles corrigés en phase et en fréquence sont finalement transmis à des moyens 25 de décodage de canal qui délivrent des données 27.

De façon classique, les moyens d'échantillonnage 22 comportent des moyens de suréchantillonnage 30, des moyens 31 de stockage des échantillons obtenus, des moyens 32 de récupération de l'instant optimal d'échantillonnage, et des moyens de décimation 33 qui fournissent les symboles reçus.

Les moyens de récupération de fréquence 23 comportent des moyens 40 d'estimation du décalage en fréquence normalisé $\Delta f_0$ et des moyens 41 de correction du décalage estimé. De façon avantageuse, les moyens d'estimation du décalage en fréquence utilisent les préambules des paquets qui sont composés de symboles connus. A titre d'exemple on utilise l'algorithme d'estimation de Rife et Boorstyn qui est décrit dans l'article « Feedforward frequency estimation for PSK : a tutorial review » de M.Morelli et U. Mengali, publié dans la revue European Transactions on Communications, vol. 9, n° 2, mars-avril 1998, pages 103-106.

Les symboles $r_k^{(0)}$ délivrés en sortie des moyens de récupération de fréquence s'écrivent :

$$r_k^{(0)} = c_k . e^{j.(2\pi.k.\Delta f_1 + \Theta_0)} + n_k$$

où $\Delta f_1$ est le décalage en fréquence normalisé résiduel ($\Delta f_1 = \Delta f_0 - \Delta \hat{f}_0$), k est un indice indiquant le rang du symbole émis dans le paquet, et $n_k$ est un bruit gaussien relatif au $k^{ème}$ symbole. Les moyens de récupération de phase ont pour fonction de corriger la phase $\Theta_k = 2\pi. \Delta f_1 . k + \Theta_0$.

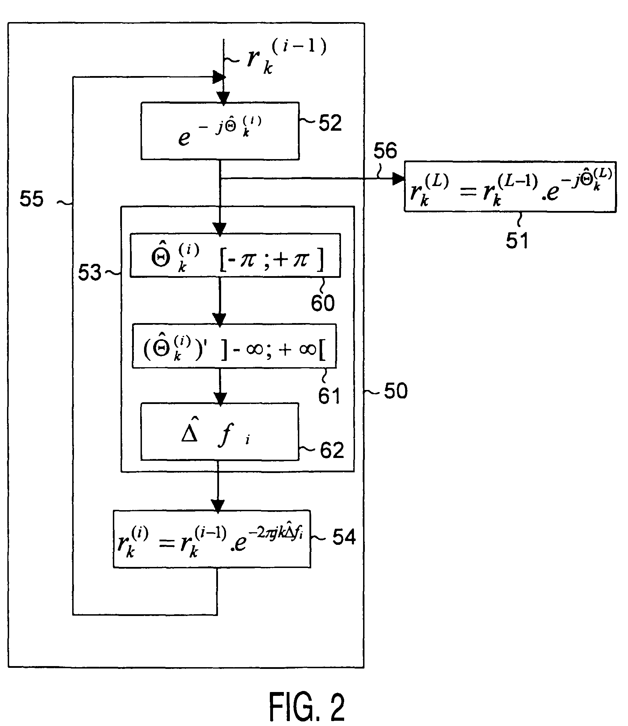

Sur la figure 2, on a représenté à titre d'exemple des moyens de récupération de phase 24 qui mettent en oeuvre le procédé de récupération de phase selon l'invention. Ces moyens de récupération de phase 24 comportent des moyens 50 d'estimation de phase et des moyens 51 de correction de phase. Les moyens d'estimation de phase 50 sont constitués par une boucle destinée à être parcourue L fois. Dans la suite de la description, l'indice i (i=1 à L) est un compteur de boucle. Chaque valeur de i correspond donc à un parcours de la boucle. La boucle comporte :

- des moyens classiques d'estimation de phase 52 qui sont destinés à recevoir un paquet de symboles $r_k^{(i-1)}$(i=1 à L, et k=1 à m+p) et à estimer la phase des symboles de données utilisateur dudit paquet,
- des moyens 53 de calcul d'une erreur en fréquence relative au dit paquet, à partir des phases estimées pour les symboles de données utilisateur de ce paquet,
- des moyens 54 de correction en fréquence de tous les symboles du paquet, pour corriger ladite erreur en fréquence,
- des moyens 55 de bouclage qui fournissent les symboles $r_k^{(i)}$ corrigés en fréquence aux moyens d'estimation de phase 52, pour un parcours suivant de la boucle,
- et des moyens 56 de sortie de boucle qui fournissent aux moyens 51 de correction de phase les phases estimées $\Theta_k^{(L)}$ (ou directement la correction à apporter

$$e^{-j\hat{\Theta}_k^{(L)}}),$$

et les symboles à corriger $r_k^{(L-1)}$ (k=m+1 à m+p).

De façon avantageuse, les moyens classiques d'estimation de phase 52 sont des moyens d'estimation à maximisation d'espérance (couramment appelés EM de l'anglais « Expectation Maximization ») tels que décrits au paragraphe 3.3 (pages 942 à 943) du compte rendu de conférence déjà cité.

Un estimateur EM est un estimateur itératif qui, pour un symbole $r_k^{(i-1)}$, délivre une correction de phase sous la forme

$$e^{-j\hat{\Theta}_k^{(i)}}$$

où $\hat{\Theta}_k^{(i)}$ est l'estimation de phase.

Un tel estimateur utilise une fenêtre d'observation de $2N^{(i)}+1$ symboles pour calculer une correction de phase relative à un symbole. Autrement dit, il utilise les symboles

$$r_{k-N^{(i)}}^{(i-1)}$$

à

$$r_{k+N^{(i)}}^{(i-1)}$$

pour calculer une correction de phase relative au symbole $r_k^{(i-1)}$. De façon avantageuse, la taille de la fenêtre d'observation $(2N^{(i)}+1)$ est optimisée, par simulations, pour chaque parcours de la boucle : on choisit $N^{(i)}$ de telle sorte que la variance de l'écart en fréquence normalisé résiduel

$$(\Delta f_1 - \sum_{k=1}^{i}\hat{\Delta f_k})$$

soit minimale. En particulier, la fenêtre est d'autant plus grande que le décalage en fréquence normalisé résiduel est faible. La taille de la fenêtre d'observation augmente donc à chaque parcours de la boucle.

Une correction de phase initiale est nécessaire pour initier l'algorithme itératif d'estimation de phase pour le premier symbole de données utilisateur (k=m+1). De façon avantageuse, on utilise pour cela les Z symboles du préambule qui précèdent le premier symbole de données utilisateur (Z étant inférieur ou égale à la taille du préambule). Si $r_k^{(i-1)}$ sont les symboles reçus correspondants à ces Z symboles du préambule et ck sont les symboles connus du préambule, la correction de phase initiale

$$e^{-j\hat{\Theta}_{m+1}^{(i)}}$$

est par exemple donnée par :

$$e^{-j\hat{\Theta}_{m+1}^{(i)}} = \frac{\sum_{k=0}^{Z}c_k(r_k^{(i-1)})^*}{\left|\sum_{k=0}^{Z}c_k(r_k^{(i-1)})^*\right|}$$

où la notation $*$ indique le conjugué d'une grandeur complexe

Les moyens d'estimation de phase 52 reçoivent initialement les symboles $r_k^{(0)}$ (k=1 à m+p) issus des moyens de récupération de fréquence 23. D'une façon générale, lorsque la boucle est parcourue pour la $i^{\text{ème}}$ fois, il reçoivent les symboles $r_k^{(i-1)}$ (k=1 à m+p) obtenus lors du parcours précédent de la boucle. Pour chacun des symboles de données utilisateur (k=m+1, ..., m+p), ils calculent une correction de phase

$$e^{-j\hat{\Theta}_k^{(i)}}$$

qui est transmise aux moyens de calcul 53.

Les moyens de calcul 53 calculent une estimation de l'erreur de fréquence $\Delta f_i$ relative aux symboles $r_k^{(i-1)}$ (k=1 à m+p) d'un même paquet, à partir des corrections de phases obtenues pour les symboles de données utilisateur $r_k^{(i-1)}$ (k=m+1 à m+p) de ce paquet. Pour cela ils comportent des moyens 60 de calcul des estimation de phase $\Theta_k^{(i)}$ à partir des corrections de phase

$$e^{-j\hat{\Theta}_k^{(i)}}$$

relatives aux symboles $r_k^{(i-1)}$ (k=m+1 à m+p). Les estimations obtenues sont comprises entre $-\pi$ et $+\pi$. Des moyens de conversion 61 permettent d'obtenir à partir des estimations $\Theta_k^{(i)}$ des estimations $(\Theta_k^{(i)})^1$ comprises entre $-\infty$ et $+\infty$. Ces estimations $(\Theta_k^{(i)})'$ sont fournies à des moyens de calcul 62 qui calculent la pente de la droite qui est la plus proche possible des valeurs $(\Theta_k^{(i)})^1$ obtenues. Pour cela, on utilise par exemple un estimateur connu sous le nom d'estimateur de Tretter et décrit au paragraphe 4.1 (page 107) de l'article déjà cité de M. Morelli et U. Mengali (cet algorithme est aussi connu sous le nom de méthode des moindres carrés ou « least mean square » en anglais).

De façon avantageuse, lorsqu'on calcule une erreur en fréquence pour les symboles d'un paquet, les derniers symboles du paquet ne sont pas utilisés, parce que l'estimation de phase correspondante n'a pas été faite sur une fenêtre suffisamment longue, et que donc elle n'est pas précise.

La pente obtenue constitue une estimation de l'erreur en fréquence $\Delta f_i$, relative aux symboles du paquet. Cette erreur en fréquence est transmise à des moyens 54 de correction de fréquence qui corrigent en fréquence tous les symboles du paquet (les symboles du préambule et les symboles de données utilisateur) en les multipliant par

$$e^{-2\pi\,\mathrm{j}\,\mathrm{k}\,\hat{\Delta} f_i}.$$

Les symboles obtenus $r_k^{(i)} = r_k^{(i-1)}$

$$.e^{-2\pi\,\mathrm{j}\,\mathrm{k}\,\hat{\Delta} f_i}$$

sont transmis à des moyens d'estimation de phase 52 pour un nouveau parcours de la boucle. Lors du dernier parcours de la boucle (i=L), les symboles $r_k^{(L-1)}$ (k=m+1 à m+p) et la correction de phase

$$e^{-j\hat{\Theta}_k^{(L)}}$$

à apporter à ces symboles sont transmis aux moyens 51 de correction de phase. Les moyens 51 de correction de phase appliquent la correction de phase

$$e^{-j\hat{\Theta}_k^{(L)}}$$

symboles $r_k^{(L-1)}$ (k=1,..., m+p).

Des essais ont montré que, dans la pratique, il est suffisant d'effectuer deux à trois parcours de la boucle pour améliorer de façon significative le taux d'erreur binaire lorsque le décalage en fréquence normalisé $\Delta f_0$ est égal à 1% et que le maximum du décalage en fréquence normalisé résiduel $\Delta f_1$ est égal à $2.10^{-3}$.

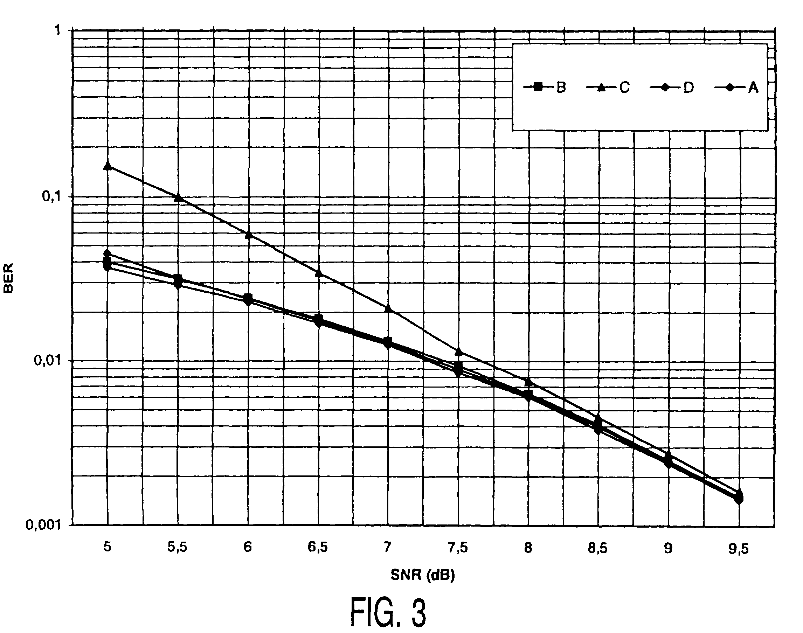

Sur la figure 3, on a représenté le taux d'erreur binaire (BER) en fonction du rapport signal à bruit (SNR) pour une modulation QPSK non codée, dans les 4 cas suivants:

- dans le cas théorique parfait où l'écart en fréquence normalisé $\Delta f_0$, la phase initiale $\Theta_0$, et l'erreur sur l'instant d'échantillonnage sont nuls (courbe A),
- lorsqu'on utilise un algorithme de type EM selon l'art antérieur avec une fenêtre d'observation de 45 symboles ($N^{(1)}$=22), pour un décalage en fréquence résiduel $\Delta f_1$=0 (courbe B),
- lorsqu'on utilise un algorithme de type EM selon l'art antérieur avec une fenêtre d'observation de 45 symboles ($N^{(1)}$=22), pour un décalage en fréquence résiduel $\Delta f_1$=0,002 (courbe C),

- et lorsqu'on utilise un algorithme selon l'invention avec deux itérations, une fenêtre de 45 symboles à la première itération ($N^{(1)}$=22) et une fenêtre de 77 symboles à la seconde itération ($N^{(2)}$=38), pour un écart en fréquence résiduel $\Delta f_1$=0,002 (courbe D).

On constate que l'invention permet d'atteindre, en présence d'un écart en fréquence résiduel, des performances équivalentes à celles obtenues avec l'art antérieur lorsque l'écart en fréquence résiduel est nul, et très proches des performances optimales de la courbe A.

Des résultats similaires sont obtenus avec des modulations codées.

Dans la description qui vient d'être faite, on a supposé que le nombre L de parcours de la boucle est fixe. Ceci n'est pas limitatif. Dans un autre mode de réalisation, on fixe un nombre maximum de parcours à ne pas dépasser (5 par exemple), et on compare à la fin de chaque parcours l'estimation $\Delta f_i$ obtenue à un seuil de référence ($10^{-5}$ par exemple). Lorsque $\Delta f_i$ est inférieure à ce seuil, on effectue une dernière estimation de phase et on sort de la boucle.

L'invention n'est pas limitée à l'utilisation d'un algorithme d'estimation de phase de type à maximisation d'espérance. Elle est généralisable à tout type d'algorithme d'estimation de phase. Par exemple, on peut également utiliser un algorithme du type « Viterbi & Viterbi » tel que décrit au paragraphe 3.2 du compte rendu de conférence déjà cité.

On a décrit un système de communication par paquets parce que l'invention s'applique particulièrement bien à ce type de système. Mais l'invention est aussi applicable aux transmissions continues, à condition de traiter les données reçues paquet par paquet.

## Revendications

1. Système de communication comportant au moins un émetteur (1) et un récepteur (2) destiné à recevoir des symboles et doté d'un dispositif d'estimation de phase (50) et d'un dispositif de correction de phase (52), caractérisé en ce que ledit dispositif d'estimation de phase est constitué d'une boucle destinée à être parcourue plusieurs fois pour traiter des symboles d'entrée ($r_k^{(i-1)}$), qui pour le premier parcours sont constitués par les symboles reçus ($r_k^{(0)}$), et qui comporte :

- des moyens (52) d'estimation de phase destinés à estimer la phase d'au moins une partie desdits symboles d'entrée,
- des moyens (53) de calcul d'une erreur en fré-

quence $(\hat{\Delta f_i})$ relative aux dits symboles d'entrée, à partir des phases estimées

$$(e^{-j\hat{\Theta}_k^{(i)}}),$$

- des moyens (54) de correction en fréquence desdits symboles, pour corriger ladite erreur en fréquence,
- des moyens (55) de bouclage pour fournir les symboles corrigés en fréquence $(r_k^{(i)})$ aux dits moyens d'estimation de phase, pour constituer les symboles d'entrée pour le parcours suivant,
- des moyens (56) de sortie de boucle pour fournir des phases estimées

$$(e^{-j\hat{\Theta}_k^{(L)}})$$

et des symboles à corriger $(r_k^{(L-1)})$ aux dits moyens de correction de phase.

2. Système de communication selon la revendication 1, caractérisé en ce que lesdits moyens d'estimation sont du type à maximisation d'espérance.

3. Système de communication selon la revendication 1, caractérisé en ce que lesdits moyens de calcul de l'erreur en fréquence, pour une pluralité de symboles constituée de premiers symboles et de derniers symboles, comportent des moyens de calcul de la pente d'une droite obtenue à partir des phases estimées pour une partie au moins desdits premiers symboles.

4. Récepteur destiné à être utilisé dans un système de communication selon la revendication 1.

5. Procédé d'estimation de phase destiné à être appliqué à des symboles reçus par un récepteur, caractérisé en ce qu'il comporte :

- une boucle, destinée à être itérée plusieurs fois pour traiter des symboles d'entrée qui, pour la première itération sont constitués par les symboles reçus, ladite boucle comportant :

  → une étape d'estimation de phase pour estimer la phase d'au moins une partie desdits symboles d'entrée,
  → une étape de calcul d'une erreur en fréquence relative aux dits symboles d'entrée, à partir des phases estimées,
  → et une étape de correction en fréquence desdits symboles d'entrée, pour corriger ladite erreur en fréquence, les symboles corrigés constituant les symboles d'entrée pour l'itération suivante,

- et une sortie de boucle pour délivrer des phases estimées et des symboles à corriger.

6. Procédé d'estimation de phase selon la revendication 5, caractérisé en ce que ladite étape d'estimation de phase utilise des moyens d'estimation du type à maximisation d'espérance.

7. Procédé d'estimation de phase selon la revendication 5, caractérisé en ce que l'étape de calcul de l'erreur en fréquence est appliquée à une pluralité de symboles constituée de premiers symboles et de derniers symboles, et consiste à calculer la pente d'une droite obtenue à partir des phases estimées pour une partie au moins desdits premiers symboles.

8. Procédé de récupération de phase destiné à être appliqué à des symboles reçus par un récepteur, ledit procédé comportant une étape d'estimation de phase et une étape de correction de la phase, caractérisé en ce que ladite étape d'estimation de phase comporte :

- une boucle, destinée à être itérée plusieurs fois pour traiter des symboles d'entrée qui, pour la première itération sont constitués par les symboles reçus, ladite boucle comportant :

  → une étape d'estimation de phase pour estimer la phase d'au moins une partie desdits symboles d'entrée,
  → une étape de calcul d'une erreur en fréquence relative aux dits symboles d'entrée, à partir des phases estimées,
  → et une étape de correction en fréquence desdits symboles d'entrée, pour corriger ladite erreur en fréquence, les symboles corrigés constituant les symboles d'entrée pour l'itération suivante,

- et une sortie de boucle pour délivrer des phases estimées et des symboles à corriger.

9. Programme d'ordinateur contenant des instructions pour la mise en oeuvre d'un procédé d'estimation de phase selon la revendication 5.

FIG. 1

FIG. 2

FIG. 3

**Office européen des brevets**

**RAPPORT DE RECHERCHE EUROPEENNE**

Numéro de la demande

EP 00 20 3868

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | WO 98 36580 A (D S P C ISRAEL LTD) 20 août 1998 (1998-08-20) * page 1, ligne 4,5 * * page 3, ligne 13-20 * * page 4, ligne 3-12 * * page 7, ligne 18-22 * * page 11, ligne 17 - page 12, ligne 3 * | 1-9 | H04L27/233 H04L27/227 |
| X | US 5 151 925 A (GELIN BENOIT  ET AL) 29 septembre 1992 (1992-09-29) * colonne 1, ligne 9-19 * * colonne 1, ligne 58 - colonne 2, ligne 18 * * colonne 2, ligne 58 - colonne 3, ligne 18 * * colonne 11, ligne 41 - colonne 12, ligne 2 * | 1-9 | |
| A | WO 99 12290 A (NOKIA TELECOMMUNICATIONS OY ;PIIRAINEN OLLI (FI)) 11 mars 1999 (1999-03-11) * page 1, ligne 4-25 * | 1,2,5,6, 8,9 | |
| D,A | MORELLI M ET AL: "FEEDFORWARD FREQUENCY ESTIMATION FOR PSK: A TUTORIAL REVIEW" , EUROPEAN TRANSACTIONS ON TELECOMMUNICATIONS,IT,EUREL PUBLICATION, MILANO, VOL. 9, NR. 2, PAGE(S) 103-116 XP000751909 ISSN: 1124-318X * abrégé * * page 107, colonne de gauche, ligne 1 - colonne de droite, ligne 3 * | 1,3,5, 7-9 | **DOMAINES TECHNIQUES RECHERCHES (Int.Cl.7)** H04L G10L |

Le présent rapport a été établi pour toutes les revendications

| Lieu de la recherche | Date d'achèvement de la recherche | Examinateur |
|---|---|---|
| LA HAYE | 9 février 2001 | Traverso, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**   EP 00 20 3868

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

09-02-2001

| Document brevet cité au rapport de recherche | Date de publication | Membre(s) de la famille de brevet(s) | Date de publication |
|---|---|---|---|
| WO 9836580 A | 20-08-1998 | IL 120210 A | 31-12-1999 |
| | | AU 5877298 A | 08-09-1998 |
| | | BR 9808879 A | 11-07-2000 |
| | | EP 0960498 A | 01-12-1999 |
| US 5151925 A | 29-09-1992 | FR 2633471 A | 29-12-1989 |
| | | CA 1308450 A | 06-10-1992 |
| | | DE 68916115 D | 21-07-1994 |
| | | DE 68916115 T | 02-02-1995 |
| | | EP 0349064 A | 03-01-1990 |
| | | JP 2046044 A | 15-02-1990 |
| | | JP 3031922 B | 10-04-2000 |
| WO 9912290 A | 11-03-1999 | FI 973564 A | 01-03-1999 |
| | | AU 8982098 A | 22-03-1999 |
| | | CN 1269081 T | 04-10-2000 |
| | | EP 1010270 A | 21-06-2000 |
| | | NO 20000997 A | 28-02-2000 |

EPO FORM P0460

Pour tout renseignement concernant cette annexe : voir Journal Officiel de l'Office européen des brevets, No.12/82